# FASCICULE DE BREVET EUROPEEN

(11) **EP 0 778 243 B1**
(45) Date de publication et mention de la délivrance du brevet: **13.10.1999**
(21) Numéro de dépôt: 96420351.7
(22) Date de dépôt: 06.12.1996
(51) Int. Cl.: C02F 1/48, F02M 27/04

(54) **Procédé d'inhibation magnétique de tartre dans une installation d'écoulement de liquide et dispositif pour sa mise en oeuvre**
Verfahren und Vorrichtung zur magnetischen Kesselstein- Bekämpfung in einer Abflussanlage
Method and device for magnetic descaling in a liquid discharging installation

(30) Priorité: 08.12.1995 FR 9514740
(43) Date de publication de la demande: 11.06.1997
(73) Titulaire: RIME SA, F-26120 Chabeuil (FR)
(72) Inventeur: Herbert, Christian, 26100 Romans (FR); Barlatier, Jean Paul, 26120 Chabeuil (FR); Lin, Wenquiang, 69003 Lyon (FR)
(74) Mandataire: Maureau, Philippe

(56) Documents cités:
- EP-A- 0 277 112
- EP-A- 0 609 636
- FR-A- 2 653 425
- FR-A- 2 660 646

## Description

La présente invention a pour objet un dispositif d'inhibition magnétique de tartre dans une installation d'écoulement de liquide et un dispositif pour sa mise en oeuvre.

Il est connu que l'action d'un champ magnétique sur les ions et particules contenus dans un liquide permet d'éviter le dépôt de tartre dans les canalisations, les installations, ou tout autre endroit immergé, et d'éliminer progressivement le tartre existant. Il est connu de réaliser le traitement magnétique d'un liquide, tel que de l'eau, en faisant circuler le liquide dans un passage réduit entre un pôle nord et un pôle sud, appelé entrefer, qui est le siège d'un fort champ magnétique. Il a été constaté que l'effet d'un dispositif magnétique dans le but d'éviter la formation de tartre est d'autant plus grand que le produit vectoriel entre le champ magnétique et la vitesse de l'eau à l'endroit où celle-ci est soumise au champ magnétique est important.

De plus, il est admis que les phénomènes provoqués sur l'eau et ses composants dissous par le champ magnétique sont régis par une cinétique, et que le temps de contact entre l'eau et le champ magnétique doit être suffisant pour que l'effet recherché soit le plus complet possible.

Des dispositifs mettant en oeuvre ce principe sont décrits notamment dans les documents US-A-4 946 590, US-A-4 888 113, et US-A-4 367 143.

Les constructeurs des dispositifs connus indiquent généralement un débit pour lequel l'efficacité du dispositif est optimal, avec une plage autour de ce débit, dans laquelle l'efficacité reste acceptable.

Les limites des dispositifs connus sont les suivantes :
- Si l'on réduit trop l'entrefer, on augmente la valeur du champ magnétique, puisque cette valeur est inversement proportionnelle au carré de la distance au pôle. Ceci va dans le sens d'un meilleur effet, toutefois on diminue le temps de contact de l'eau dans le champ magnétique, ce qui diminue l'efficacité du dispositif.
- Si l'on réduit trop l'entrefer, on diminue la section de passage de l'eau, ce qui entraîne l'augmentation rapide des pertes de charge du dispositif lorsque le débit augmente. Ces pertes de charge peuvent alors devenir rapidement intolérables et rendre impossible l'utilisation de ce dispositif.
- Le traitement des débits d'eau variables dans une plage étendue est impossible. A faible débit, la vitesse de l'eau est insuffisante pour obtenir une grande valeur du produit entre le champ magnétique et la vitesse. Au contraire, à débit important, la vitesse de l'eau est trop grande, ce qui réduit le temps de contact entre l'eau et le champ magnétique.

Le document EP-A-0 277 112 concerne un dispositif pour le traitement magnétique de liquide comprenant une chambre de passage tubulaire verticale présentant une partie conique, dans laquelle est monté un support pour plusieurs aimants permanents. Ce support qui est soumis à l'action de la gravité permet une augmentation de la section de passage du liquide lorsque le débit augmente.

Pour remédier à ces inconvénients, les constructeurs de dispositifs magnétiques de traitement de liquide proposent des modèles différents pour chaque plage de vitesse d'eau à traiter, ou bien augmentent la section de passage de l'eau sans modifier la valeur de l'entrefer, mais en augmentant sa largeur grâce à un réglage manuel.

Le but de l'invention est de fournir un procédé d'inhibition magnétique de tartre dans une installation d'écoulement de liquide, qui soit efficace sur une large plage de débit de liquide, et dans lequel l'adaptation soit faite automatiquement.

A cet effet, le procédé qu'elle concerne, consistant à faire circuler le liquide de façon laminaire dans un entrefer où règne un champ magnétique, le flux de liquide étant perpendiculaire aux lignes de ce champ, est caractérisé en ce qu'il consiste à faire varier l'entrefer dans le même sens que la valeur du débit de liquide, en faisant varier la section de passage du liquide sensiblement perpendiculairement à la direction d'écoulement de celui-ci.

Ce procédé permet d'adapter la valeur de l'entrefer au débit du liquide qui traverse le dispositif, ce qui permet de réduire les pertes de charge par rapport aux dispositifs existants à entrefer fixe. Ce procédé permet donc de traiter des plages de débit plus larges que les dispositifs existants, automatiquement, sans aucun réglage manuel.

Suivant une autre caractéristique de l'invention, ce procédé consiste à soumettre à la pression dynamique de liquide un organe coulissant qui, contenant un empilage d'aimants ou une pièce en acier doux et situé en vis-à-vis d'une pièce en acier doux ou d'un empilage d'aimants respectivement, modifie la section de passage de fluide dans le même sens que la valeur du débit de liquide.

Le dispositif réagit de la même façon, quelle que soit la pression du réseau d'eau sur lequel il est raccordé, puisque la valeur de l'entrefer est liée à la pression dynamique de l'eau à traiter. Il est donc possible de travailler, pour chacun des débits, avec un entrefer à sa valeur minimale, donc avec un effet maximal.

Un dispositif pour la mise en oeuvre de ce procédé comprend :
- un corps à l'intérieur duquel le liquide circule depuis une entrée vers une sortie,
- une cavité tubulaire d'axe incliné par rapport à la direction de circulation du liquide de l'entrée vers la sortie,
- un élément en forme de piston, réalisé en un matériau amagnétique, monté coulissant axialement dans la cavité tubulaire et contenant soit un empilage d'aimants disposés entre deux plaques d'acier doux, soit une pièce en acier doux, tandis que la paroi du corps située parallèlement et en vis-à-vis est respectivement équipée soit d'une pièce en acier doux, soit d'un empilage d'aimants disposés entre deux plaques d'acier doux,
- la face du piston située du côté du passage de fluide étant inclinée par rapport à la direction X de la veine de fluide.

Les lignes de champ magnétique issues de l'empilage des aimants et guidées par les plaques en acier doux traversent l'entrefer perpendiculairement au flux d'eau, sont guidées à l'intérieur de la pièce en acier doux située en vis-à-vis, et traversent à nouveau l'entrefer perpendiculairement au flux d'eau pour reboucler dans l'empilage d'aimants par le pôle opposé à celui dont elles étaient issues. A faible débit, l'eau circule de l'entrée dans le dispositif vers la sortie en passant dans un entrefer étroit. Lorsque le débit augmente, la vitesse de l'eau augmente et donc sa pression dynamique, qui agit sur la face en bout du piston en exerçant sur celui-ci une force opposée à la force d'attraction exercée par le champ magnétique. Le piston peut donc se déplacer vers l'intérieur de la cavité lorsque la force résultante due à la pression dynamique est supérieure à celle due à l'attraction magnétique, réalisant une augmentation de la valeur de l'entrefer. Lorsque la valeur du débit décroît et que la pression dynamique baisse, l'entrefer décroît sous l'effet de l'attraction magnétique.

Suivant une caractéristique de l'invention, le piston est monté libre en translation mais bloqué en rotation dans la cavité, et comporte à cet effet une rainure axiale dans laquelle est engagé un doigt dépassant de la paroi de la cavité, ou inversement.

Afin d'amplifier le phénomène de pression dynamique du liquide, le conduit de passage de liquide comporte une zone de section réduite, immédiatement en amont de la cavité contenant le piston.

Selon une autre caractéristique de l'invention, afin de réaliser un équilibrage des pressions de liquide de part et d'autre du piston, le dispositif comporte un conduit de mise en communication de la chambre située, par rapport au piston, du côté du fond de la cavité, avec le passage de fluide, en amont du piston.

Selon une forme d'exécution de ce dispositif, le piston contient un empilage d'aimants disposés entre deux plaques d'acier doux dont les extrémités, situées du côté de la face du piston en contact avec la veine de liquide, sont amincies. Cet amincissement de la section des plaques en acier doux permet de concentrer les lignes de champ magnétique.

Afin de régler la valeur de l'entrefer pour un débit de liquide nul ou minimal, une entretoise est disposée entre la face du piston située du côté de la veine de liquide et la paroi du corps disposée en vis-à-vis.

Suivant une forme d'exécution de ce dispositif, l'axe de la cavité, dans laquelle est monté le piston est perpendiculaire à la direction d'écoulement du liquide et le piston se présente sous la forme d'un cylindre dont l'extrémité située du côté de la veine de liquide est tronquée pour former une face oblique.

Suivant une autre forme d'exécution de ce dispositif, l'axe de la cavité dans laquelle est monté le piston forme un angle obtus avec la direction d'écoulement du liquide, la valeur de cet angle étant considérée depuis le côté d'entrée du liquide, et le piston est de forme cylindrique avec une face située du côté de la veine liquide perpendiculaire à l'axe du piston et parallèle à un organe disposé en vis-à-vis de l'autre côté de la veine de liquide.

De toute façon, l'invention sera bien comprise à l'aide de la description qui suit, en référence au dessin schématique annexé représentant, à titre d'exemples non limitatifs, plusieurs formes d'exécution de ce dispositif :
Figure 1 est une vue en coupe longitudinale d'un premier dispositif lors du passage d'un débit minimal de liquide ;
Figure 2 est une vue en coupe transversale de ce dispositif selon la ligne II-II de figure 1 ;
Figure 3 est une vue similaire à figure 1 lors du passage d'un débit plus important ;
Figure 4 est une vue d'une variante du piston du dispositif de figure 1;
Figure 5 est une vue d'une variante de l'agencement d'aimants ;
Figure 6 est une vue en coupe longitudinale d'une deuxième forme d'exécution de ce dispositif.

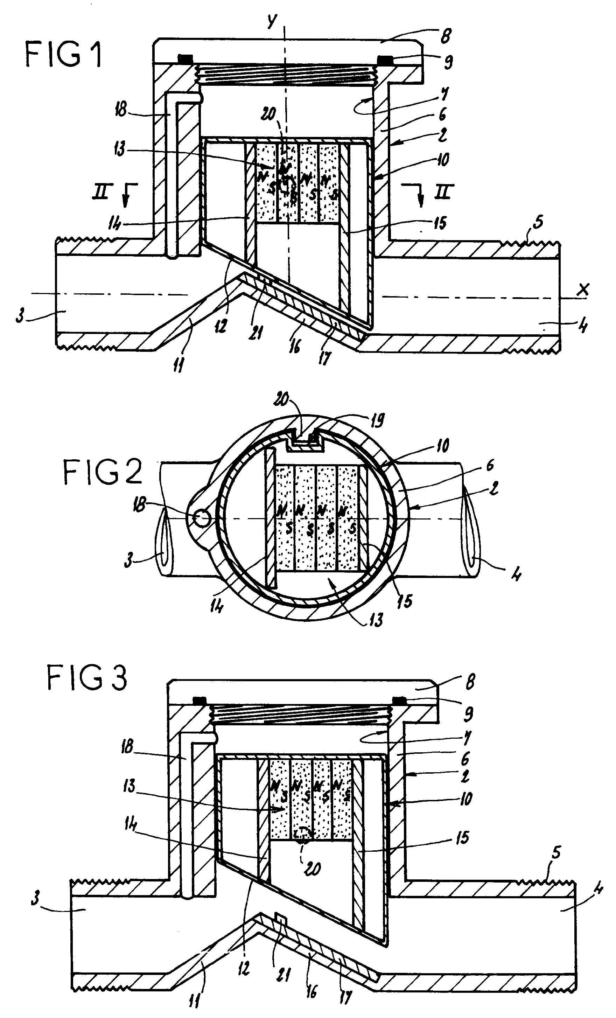

Le dispositif selon l'invention comprend un corps 2 dans lequel circule un liquide, tel que de l'eau, depuis une entrée 3 vers une sortie 4, les entrée 3 et sortie 4 comportant des filetages 5 permettant leur raccordement à d'autres éléments de l'installation. Le corps du dispositif représenté aux figures 1 à 3 comprend une partie tubulaire 6, perpendiculaire à la direction d'écoulement du liquide entre l'entrée et la sortie, dans laquelle est ménagée une cavité 7 de forme cylindrique fermée par un bouchon 8 avec réalisation de l'étanchéité par un joint 9. L'axe Y de cette cavité est perpendiculaire à l'axe X de circulation du liquide entre l'entrée et la sortie.

A l'intérieur de la cavité 7 est monté un ensemble coulissant 10 en forme de piston. Ce piston 10 comporte une extrémité inférieure, ou fond 12, tronquée, pour être tourné partiellement du côté de l'entrée 3. A l'intérieur du piston qui est réalisé en un matériau amagnétique, tel que cuivre, laiton ou matière synthétique, est disposé un empilage d'aimants 13 disposés de façon alternée nord-sud, entre deux plaques d'acier doux 14 et 15, destinées à guider et concentrer les lignes de champ magnétique issues de l'empilage d'aimants.

Le corps 2 du dispositif comprend, en regard de la cavité, deux parois inclinées 11 et 16, à la façon d'un V, de telle sorte que la paroi 11 réalise un rétrécissement de la veine de liquide juste en amont du piston 10, et que la paroi 16 est orientée parallèlement au fond incliné 12 du piston. Dans la paroi inclinée 16 est logée une pièce 17 en acier doux.

Un conduit 18 met en communication le fond de la cavité 7 avec la partie du conduit de fluide située en amont du piston 10. En outre, le piston 10 comporte une rainure axiale 19 débouchant dans sa face extérieure, dans laquelle est engagé un doigt 20 faisant saillie de la face intérieure de la cavité 7. La coopération de ce doigt 20 et de la fente 19 permet un guidage en translation du piston dans la cavité sans possibilité de rotation.

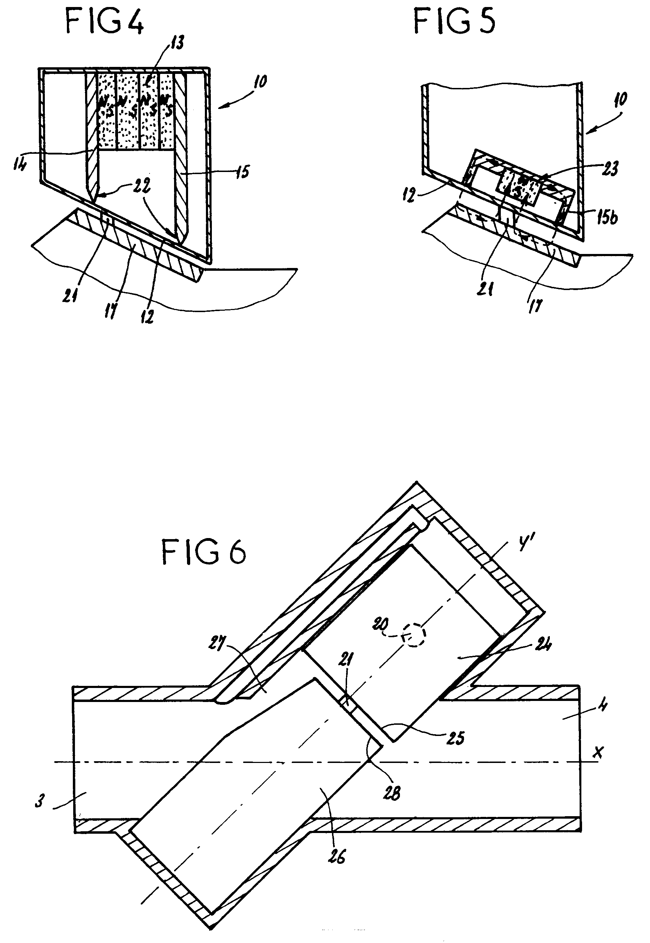

Une butée 21 est fixée sur la paroi 16 du corps 2, en regard du piston, cette butée formant une entretoise déterminant la valeur de l'entrefer minimal. Dans une forme d'exécution représentée à la figure 4, les extrémités inférieures 22 des plaques 14 et 15 peuvent être amincies pour concentrer les lignes de champ magnétique.

A faible débit, l'eau circule de l'entrée 2 vers la sortie 3 en passant dans l'entrefer délimité par la butée 21.

Lorsque le débit augmente, la vitesse de l'eau augmente, de même que sa pression dynamique. Celle-ci agit sur la face inférieure du fond 12 du piston en exerçant une force qui vient en opposition à la force d'attraction exercée par le champ magnétique. Le piston peut donc coulisser et s'écarter de la paroi 16 du corps lorsque la force résultante due à la pression dynamique est supérieure à celle due à l'attraction magnétique. Il en résulte une augmentation de l'entrefer, et une diminution des pertes de charge.

Lorsque la valeur du débit décroît, la pression dynamique décroît également et la valeur de l'entrefer diminue. La figure 3 montre le dispositif dans une position du piston 10 obtenue par exercice sur son fond incliné 12 d'une pression dynamique importante résultant d'un débit plus important que celui envisagé à la figure 1.

La figure 5 représente une variante d'exécution du dispositif de figure 1, dans laquelle est envisagé un autre type de montage d'aimants 23.

Dans ce cas, il est prévu un aimant cylindrique 23 ou un empilage d'aimants cylindriques ou pastilles magnétiques, au centre d'une pièce cylindrique de révolution 15b réalisée en acier doux. Le bord inférieur de la pièce cylindrique 15b peut être aminci pour concentrer les lignes de champ magnétique.

Dans la forme d'exécution représentée à la figure 6, l'axe Y' de la cavité forme un angle obtus avec l'axe X d'écoulement du liquide, la valeur de cet angle étant considérée à partir de l'entrée du liquide.

Dans ce cas, le piston 24 est de forme cylindrique et comporte une paroi inférieure perpendiculaire à l'axe Y'. Le corps porte dans ce cas-là un organe 26 qui assure une réduction de la section de passage du liquide en 27, en amont du piston 24, et qui comporte une paroi 28 contenant une pièce en acier doux, parallèle au fond 25 du piston 24.

Comme il ressort de ce qui précède, l'invention apporte une grande amélioration à la technique existante en fournissant un procédé et un dispositif permettant d'adapter automatiquement la valeur de l'entrefer au débit du liquide qui traverse le dispositif, et qui réduit donc les pertes de charge par rapport au dispositif existant à entrefer fixe.

Une autre variante de l'invention est que les aimants pourraient être associés au corps et, par conséquent, à la partie fixe, et que la pièce en fer doux correspondante pourrait être associée au piston.

## Revendications

1. Procédé d'inhibition magnétique de tartre dans une installation d'écoulement de liquide, consistant à faire circuler le liquide de façon laminaire dans un entrefer où règne un champ magnétique, le flux de liquide étant perpendiculaire aux lignes de ce champ, caractérisé en ce qu'il consiste à faire varier l'entrefer (12-17) dans le même sens que la valeur du débit de liquide, en faisant varier la section de passage du liquide sensiblement perpendiculairement à la direction d'écoulement de celui-ci.

2. Procédé selon la revendication 1, caractérisé en ce qu'il consiste à soumettre à la pression dynamique de liquide un organe coulissant (10) qui, contenant un empilage d'aimants (13) ou une pièce en acier doux (17) et situé en vis-à-vis d'une pièce en acier doux ou d'un empilage d'aimants respectivement, modifie la section de passage de fluide dans le même sens que la valeur du débit de liquide.

3. Dispositif pour la mise en oeuvre du procédé selon l'une quelconque des revendications 1 et 2, caractérisé en ce qu'il comprend :
- un corps (2) à l'intérieur duquel le liquide circule depuis une entrée (3) vers une sortie (4),
- une cavité tubulaire (7) d'axe (Y) incliné par rapport à la direction (X) de circulation du liquide de l'entrée vers la sortie,
- un élément (10) en forme de piston, réalisé en un matériau amagnétique, monté coulissant axialement dans la cavité tubulaire (7) et contenant soit un empilage d'aimants (13) disposés entre deux plaques d'acier doux (14, 15), soit une pièce en acier doux, tandis que la paroi (16) du corps située parallèlement et en vis-à-vis est respectivement équipée soit d'une pièce en acier doux (17), soit d'un empilage d'aimants disposés entre deux plaques d'acier doux,
- la face (12) du piston située du côté du passage de fluide étant inclinée par rapport à la direction (X) de la veine de fluide.

4. Dispositif selon la revendication 3, caractérisé en ce que le piston contient un empilage d'aimants (13) disposés entre deux plaques d'acier doux (14, 15) dont les extrémités (22), situées du côté de la face du piston en contact avec la veine de liquide, sont amincies.

5. Dispositif pour la mise en oeuvre du procédé selon l'une quelconque des revendications 1 et 2, caractérisé en ce qu'il comprend :
- un corps (2) à l'intérieur duquel le liquide circule depuis une entrée (3) vers une sortie (4),
- une cavité tubulaire (7) d'axe (Y) incliné par rapport à la direction (X) de circulation du liquide de l'entrée vers la sortie,
- un élément (10) en forme de piston, réalisé en un matériau amagnétique, monté coulissant axialement dans la cavité tubulaire (7) et contenant un aimant cylindrique (23) ou un empilage d'aimants cylindriques (23) disposés à l'intérieur d'une pièce cylindrique de révolution (15b) en acier doux, soit une pièce en acier doux, tandis que la paroi (16) du corps située parallèlement et en vis-à-vis est respectivement équipée soit d'une pièce en acier doux, soit d'un aimant cylindrique ou d'empilage d'aimants cylindriques disposés à l'intérieur d'une pièce cylindrique de révolution en acier doux,
- la face (12) du piston située du côté du passage de fluide étant inclinée par rapport à la direction (X) de la veine de fluide.

6. Dispositif selon l'une des revendications 3 à 5, caractérisé en ce que le piston (10) est monté libre en translation mais bloqué en rotation dans la cavité, et comporte à cet effet une rainure axiale (19) dans laquelle est engagé un doigt (20) dépassant de la paroi de la cavité, ou inversement.

7. Dispositif selon l'une quelconque des revendications 3 à 6, caractérisé en ce que le conduit de passage de liquide comporte une zone de section réduite, immédiatement en amont de la cavité (7) contenant le piston (10).

8. Dispositif selon l'une quelconque des revendications 3 à 7, caractérisé en ce qu'il comporte un conduit (18) de mise en communication de la chambre située, par rapport au piston, du côté du fond de la cavité (7), avec le passage de fluide, en amont du piston.

9. Dispositif selon l'une quelconque des revendications 3 à 8, caractérisé en ce qu'une entretoise (21) est disposée entre la face (12) du piston située du côté de la veine de liquide et la paroi (16, 17) du corps disposée en vis-à-vis.

10. Dispositif selon l'une quelconque des revendications 3 à 9, caractérisé en ce que l'axe (7) de la cavité (7), dans laquelle est monté le piston (10) est perpendiculaire à la direction d'écoulement du liquide et le piston (10) se présente sous la forme d'un cylindre dont l'extrémité située du côté de la veine de liquide est tronquée pour former une face oblique (12).

11. Dispositif selon l'une quelconque des revendications 3 à 9, caractérisé en ce que l'axe (Y') de la cavité dans laquelle est monté le piston (24) forme un angle obtus avec la direction (X) d'écoulement du liquide, la valeur de cet angle étant considérée depuis le côté d'entrée du liquide, et le piston est de forme cylindrique avec une face (25) située du côté de la veine liquide perpendiculaire à l'axe du piston et parallèle à un organe (26, 28) disposé en vis-à-vis de l'autre côté de la veine de liquide.

## Claims

1. Process for the magnetic inhibition of scale inside a liquid flow installation, consisting of causing the liquid to circulate in a laminar manner in a gap where a magnetic field exists, the flow of liquid being perpendicular to the lines of this field, characterized in that it consists of causing the gap (12-17) to vary in the same direction as the value of the liquid flow rate, by varying the cross section of the passageway for the liquid substantially perpendicular to the direction of flow thereof.

2. Process according to claim 1, characterized in that it consists of subjecting to the dynamic pressure of the liquid a sliding device (10) which, containing a stack of magnets (13) or a mild steel part (17) and situated facing a mild steel part or a stack of magnets respectively, modifies the cross section of the fluid passageway in the same direction as the value of the liquid flow rate.

3. Device for implementing the process according to either of claims 1 or 2, characterized in that it comprises:
- a body (2) inside which the liquid circulates from an inlet (3) to an outlet (4),
- a tubular cavity (7) with an axis (Y) inclined in relation to the direction (X) of circulation of the liquid from the inlet towards the outlet,
- a component (10) in the form of a piston, made of a non-magnetic material, mounted so as to slide axially in the tubular cavity (7) and containing either a stack of magnets (13) disposed between two mild steel plates (14, 15), or a mild steel part, while the wall (16) of the body situated parallel and opposite, is respectively equipped either with a mild steel part (17) or a stack of magnets disposed between two mild steel plates,
- the face (12) of the piston situated on the side of the fluid passageway being inclined with respect to the direction (X) of the fluid stream.

4. Device according to claim 3, characterized in that the piston contains a stack of magnets (13) disposed between two mild steel plates (14, 15) of which the ends (22), situated towards the face of the piston in contact with the liquid stream, are reduced in thickness.

5. Device for implementing the process according to either of claims 1 or 2, characterized in that it comprises:
- a body (2) inside which the liquid circulates from an inlet (3) to an outlet (4),
- a tubular cavity (7) with an axis (Y) inclined in relation to the direction (X) of circulation of the liquid from the inlet towards the outlet,
- a component (10) in the form of a piston, made of a non-magnetic material, mounted so as to slide axially in the tubular cavity (7) and containing a cylindrical magnet (23) or a stack of cylindrical magnets (23) disposed inside a cylindrical part of revolution (15b) made of mild steel, or a mild steel part, while the wall (16) of the body situated parallel and opposite is respectively equipped either with a mild steel part, or with a cylindrical magnet or with a stack of cylindrical magnets disposed inside a cylindrical part of revolution made of mild steel,
- the face (12) of the piston situated on the side of the fluid passageway being inclined with respect to the direction (X) of the fluid stream.

6. Device according to one of claims 3 to 5, characterized in that the piston (10) is mounted freely in translation but locked in rotation in the cavity, and includes for this purpose an axial groove (19) in which a finger (20) is engaged, projecting from the wall of the cavity or conversely.

7. Device according to any one of claims 3 to 6, characterized in that the conduit for the passage of the liquid includes a zone with a reduced cross-section, immediately upstream to the cavity (7) containing the piston (10).

8. Device according to any one of claims 3 to 7, characterized in that it includes a conduit (18) for putting the chamber, which is situated, with respect to the piston, towards the bottom of the cavity (7), into communication with the fluid passageway, upstream to the piston.

9. Device according to any one of claims 3 to 8, characterized in that a strut (21) is disposed between the face (12) of the piston situated on the side of the liquid stream and the wall (16, 17) of the body disposed opposite.

10. Device according to any one of claims 3 to 9, characterized in that the axis (7) of the cavity (7) in which the piston (10) is mounted, is perpendicular to the direction of flow of the liquid and the piston (10) is in the form of a cylinder of which the end situated on the side of the liquid stream is truncated so as to form an oblique face (12).

11. Device according to any one of claims 3 to 9, characterized in that the axis (Y') of the cavity in which the piston (24) is mounted, forms an obtuse angle with the direction of flow (X) of the liquid, the value of this angle being considered from the liquid inlet side, and the piston has a cylindrical shape with a face (25) situated on the side of the liquid stream perpendicular to the axis of the piston and parallel to a device (26, 28) disposed opposite, on the other side of the liquid stream.

## Patentansprüche

1. Verfahren zur magnetischen Bekämpfung von Kesselstein in einer Abflußanlage, bei dem man die Flüssigkeit laminar in einem Eisenspalt strömen läßt, in welchem ein magnetisches Feld besteht, wobei der Flüssigkeitsstrom senkrecht zu den Feldlinien verläuft, dadurch gekennzeichnet, daß man bei dem Verfahren den Eisenspalt (12-17) in derselben Richtung verändert wie den Wert des Flüssigkeitsdurchflusses, indem man den Durchtrittsquerschnitt der Flüssigkeit im wesentlichen senkrecht zu deren Abflußrichtung verändert.

2. Verfahren nach Anspruch 1, dadurch gekennzeichnet, daß man bei dem Verfahren ein Gleitglied (10) dem dynamischen Flüssigkeitsdruck aussetzt, wobei das Gleitglied, welches eine Magnet-Stapelanordnung (13) oder ein Stück aus Weicheisen (17) enthält und gegenüber von einem Stück aus Weicheisen bzw. einer Magnet-Stapelanordnung angeordnet ist, den Fluid-Durchtrittsquerschnitt in derselben Richtung wie den Wert des Flüssigkeitdurchflusses verändert.

3. Vorrichtung zur Durchführung des Verfahrens nach einem der Ansprüche 1 und 2, dadurch gekennzeichnet, daß sie aufweist:
- einen Körper (2), in dessem Innern die Flüssigkeit von einem Einlaß (3) Zu einem Auslaß (4) strömt,
- einen rohrförmigen Hohlraum (7) mit einer Achse (Y), die bezüglich der Strömungsrichtung (X) der Flüssigkeit vom Einlaß zum Auslaß geneigt ist,
- ein Element (10) in Form eines Kolbens, das aus einem nichtmagnetischen Material besteht, in dem rohrförmigen Hohlraum (7) axial gleitend gelagert ist und entweder eine Magnet-Stapelanordnung (13), die zwischen zwei Weicheisenplatten (14, 15) angeordnet ist, oder ein Stück aus Weicheisen enthält, während die Wand (16) des Körpers, die parallel und gegenüberliegend angeordnet ist, mit einem Stück aus Weicheisen (17) bzw. mit einer zwischen zwei Weicheisenplatten angeordneten Magnet-Stapelanordnung ausgestattet ist,
- wobei die auf der Seite des Fluiddurchtritts befindliche Stirnfläche (12) des Kolbens bezüglich der Richtung (X) der Fluidader geneigt ist.

4. Vorrichtung nach Anspruch 3, dadurch gekennzeichnet, daß der Kolben eine Magnet-Stapelanordnung (13) enthält, die zwischen zwei Weicheisenplatten (14, 15) angeordnet ist, deren Enden (22), die sich auf der Seite der mit der Flüssigkeitsader in Berührung stehenden Stirnfläche des Kolbens befinden, verjüngt sind.

5. Vorrichtung zur Durchführung des Verfahrens nach einem der Ansprüche 1 und 2, dadurch gekennzeichnet, daß sie aufweist:
- einen Körper (2), in dessem Innern die Flüssigkeit von einem Einlaß (3) zu einem Auslaß (4) strömt,
- einen rohrförmigen Hohlraum (7) mit einer Achse (Y), die bezüglich der Strömungsrichtung (X) der Flüssigkeit vom Einlaß zum Auslaß geneigt ist,
- ein Element (10) in Form eines Kolbens, das aus einem nichtmagnetischen Material besteht, in dem rohrförmigen Hohlraum (7) axial gleitend gelagert ist und einen zylindrischen Magneten (23) oder eine Stapelanordnung zylindrischer Magnete (23), die im Innern eines zylindrischen Drehkörperstücks (15b) aus Weicheisen angeordnet ist, oder aber ein Stück aus Weicheisen enthält, während die Wand (16) des Körpers, die parallel und gegenüberliegend angeordnet ist, jeweils mit einem Stück aus Weicheisen bzw. einem zylindrischen Magneten oder einer Stapelanordnung zylindrischer Magnete, die im Innern eines zylindrischen Drehkörperstücks aus Weicheisen angeordnet sind, ausgestattet ist,
- wobei die auf der Seite des Fluiddurchtritts befindliche Stirnfläche (12) des Kolbens bezüglich der Flüssigkeitsader bzw. der Fluidader geneigt ist.

6. Vorrichtung nach einem der Ansprüche 3 bis 5, dadurch gekennzeichnet, daß der Kolben (10) frei verschiebbar, jedoch drehblockiert in dem Hohlraum gelagert ist und hierfür eine axiale Nut (19) aufweist, in die eine Nase (20) greift, die aus der Wand des Hohlraums hervorsteht, oder umgekehrt.

7. Vorrichtung nach einem der Ansprüche 3 bis 6, dadurch gekennzeichnet, daß der Kanal für den Flüssigkeitsdurchtritt unmittelbar stromauf von dem den Kolben (10) enthaltenden Hohlraum (7) einen Bereich mit verringertem Querschnitt aufweist.

8. Vorrichtung nach einem der Ansprüche 3 bis 7, dadurch gekennzeichnet, daß sie einen Kanal (18) zur Herstellung der Verbindung zu der Kammer aufweist, die sich bezüglich des Kolbens auf der Seite des Bodens des Hohlraums (7) befindet, wobei sich der Fluiddurchtritt stromauf vom Kolben befindet.

9. Vorrichtung nach einem der Ansprüche 3 bis 8, dadurch gekennzeichnet, daß ein Abstandsstück (21) zwischen der Stirnfläche (12) des auf der Seite der Flüssigkeitsader befindlichen Kolbens und der Wand (16, 17) des gegenüber angeordneten Körpers angeordnet ist.

10. Vorrichtung nach einem der Ansprüche 3 bis 9, dadurch gekennzeichnet, daß die Achse (Y) des Hohlraums (7), in dem der Kolben (10) gelagert ist, senkrecht zur Abflußrichtung der Flüssigkeit ist und der Kolben (10) in Form eines Zylinders vorliegt, dessen auf der Seite der Flüssigkeitsader befindliches Ende kegelstumpfförmig ist, um eine schräge Fläche (12) zu bilden.

11. Vorrichtung nach einem der Ansprüche 3 bis 9, dadurch gekennzeichnet, daß die Achse (Y') des Hohlraums, in dem der Kolben (24) gelagert ist, einen stumpfen Winkel mit der Abflußrichtung (X) der Flüssigkeit bildet, wobei der Wert dieses Winkels von der Einlaßseite der Flüssigkeit aus genommen wird und der Kolben eine zylindrische Form hat mit einer Stirnfläche (25), die sich auf der Seite der Flüssigkeitsader senkrecht zur Achse des Kolbens und parallel zu einem Glied (26, 28) befindet, das gegenüber von der anderen Seite der Flüssigkeitsader angeordnet ist.
